# EUROPÄISCHE PATENTSCHRIFT

(11) **EP 4 047 911 B1**
(45) Veröffentlichungstag und Bekanntmachung des Hinweises auf die Patenterteilung: **22.10.2025**
(21) Anmeldenummer: 21158702.7
(22) Anmeldetag: 23.02.2021
(51) Int. Cl.: H04M 1/02, H04M 1/24, H04M 1/738

(54) **AUFSTECK-MODUL FÜR EINE TAE, VERFAHREN ZU DESSEN IDENTIFIKATION UND AUSLESEGERÄT**
PLUG-IN MODULE FOR A TAE, METHOD FOR ITS IDENTIFICATION AND READER
MODULE D'ENFICHAGE POUR UNE UTS, SON PROCÉDÉ D'IDENTIFICATION ET APPAREIL DE LECTURE

(43) Veröffentlichungstag der Anmeldung: 24.08.2022
(73) Patentinhaber: Deutsche Telekom AG, 53113 Bonn (DE)
(72) Erfinder: Hartke, Peter, 13158 Berlin (DE); Chrast, Peter-Marc, 89129 Langenau (DE); Kaiser, Nils, 40597 Düsseldorf (DE); Landmann, Patrick, 55543 Bad Kreuznach (DE); Voigt, Sebastian, 06231 Bad Dürrenberg (DE); Hölzel, Thomas, 16540 Hohen Neuendorf (DE); Schumacher, Sarah, 22869 Schenefeld (DE); Faller, Andreas, 53332 Bornheim (DE)
(74) Vertreter: Blumbach · Zinngrebe Patentanwälte PartG mbB

(56) Entgegenhaltungen:
- DE-U1- 29 508 201
- US-A1- 2003 068 033

## Beschreibung

Die Erfindung betrifft allgemein Telefonnetze und insbesondere ein Aufsteck-Modul für eine Telekommunikations-Anschluss-Einheit, sowie ein Verfahren und eine Vorrichtung zur Identifikation eines solchen Aufsteck-Moduls.

Öffentliche Telekommunikationsnetze verfügen über zahlreiche Vermittlungsstellen, auch Ortsvermittlungsstellen genannt, an denen Endgeräte über entsprechende Teilnehmeranschlussleitungen angeschlossen sind. Die Teilnehmerendgeräte sind dabei an einer beim Teilnehmer installierten Telekommunikations-Anschluss-Einheit (TAE) angeschlossen.

Bei Einrichten eines Telefonanschlusses in den Räumen eines Teilnehmers kann von einem Mitarbeiter des Netzbetreibers mit Hilfe einer Kommunikation über die Teilnehmeranschlussleitung mit der Vermittlungsstelle geprüft werden, ob der Telefonanschluss vermittlungsseitig korrekt geschaltet ist. Dies kann beispielsweise mittels eines entsprechenden Service-Gerätes erfolgen, welches der Mitarbeiter vor Ort an die TAE anschließt.

Die sogenannte 1. TAE ist die aus Sicht des Netzbetreibers erste Anschlussdose in den Räumen des Teilnehmers. Sie ist der Übergabepunkt zum Endkunden und dient somit als Netzabschluss. Die 1. TAE gehört dem Netzbetreiber und enthält zu Messzwecken einen passiven Prüfabschluss (PPA).

Der PPA besteht aus einer Reihenschaltung einer Diode und eines Widerstandes von 470 kΩ, die zwischen die a-Ader und die b-Ader der Teilnehmeranschlussleitung geschaltet sind. Im Normalbetrieb sperrt die Diode durch die seitens der Ortsvermittlungsstelle in die a/b-Ader eingespeiste Gleichspannung, bei korrektem Anschluss der TAE an die a/b-Doppelader, d.h. die a-Klemme an Minus- und die b-Klemme an Pluspotential, ist also praktisch kein Stromfluss messbar. Zu Prüfzwecken kann von der Teilnehmerschaltung in der Vermittlungsstelle die Speisespannung des zu messenden Anschlusses umgepolt werden. Dann ist der Widerstand des PPA und damit auch der Widerstand der Teilnehmeranschlussleitung messbar. Auf diese Weise kann aus der Ferne mit der sogenannten systemexternen Prüftechnik (SEPT) überprüft werden, ob die Teilnehmeranschlussleitung bis zur 1. TAE des Benutzers in Bezug auf die galvanischen Messwerte, besonders Isolationswerte und Fremdspannungsanteile den Forderungen entspricht. Auf diese Art lässt sich beispielsweise eine Unterbrechung oder ein Leiterschluss auf der Teilnehmeranschlussleitung feststellen. Bei Abweichungen vom Sollwert können anhand des gemessenen Widerstands mögliche Fehler genauer klassifiziert werden.

Das Dokument DE 295 08 201 U1 beschreibt eine Schaltungsanordnung zum Schutz gegen einen Fremdeingriff in ein drahtgebundenes Telefonnetz, wobei ein Kontrollsystem vorgesehen ist, welches einen vor dem Hauptverteiler des Fernsprechamtes angeordneten Modulbaustein A und einen zwischen der TAE-Anschlussdose und dem Fernsprechapparat angeordneten Modulbaustein B umfasst, die jeweils an die Leitungsadern a und b angeschlossen sind, wobei zwischen den Modulbausteinen A und B ein Austausch übereinstimmender Kennungen erfolgt, welcher in die zwischen dem Fernsprechamt und dem Fernsprechapparat gebildete Leitungsschleife zum Beginn einer berechtigten Nutzung und optional während der gesamten Dauer einer berechtigten Nutzung einbezogen ist.

Der passive Prüfabschluss hat für den Netzbetreiber hauptsächlich den Zweck, bei einer Störungsmeldung durch den Benutzer möglichst schnell eine Aussage zu treffen, in wessen Verantwortungsbereich der Fehler liegt, wobei eine erfolgreiche Messung der SEPT keine Aussage darüber zulässt, ob die Telefonleitung an die richtige Örtlichkeit geschaltet ist.

Der Erfindung liegt die Aufgabe zugrunde, einen Weg aufzuzeigen, wie das Einrichten eines Telefonanschlusses verbessert und/oder vereinfacht werden kann.

Das oben genannte technische Problem wird durch ein Aufsteck-Modul für eine Telekommunikations-Anschluss-Einheit gemäß Anspruch 1, ein Auslesegerät gemäß Anspruch 13 und ein Verfahren gemäß Anspruch 15 gelöst. Vorteilhafte Ausführungsformen und Weiterbildungen sind Gegenstand der jeweiligen Unteransprüche.

Ein Kerngedanke der Erfindung ist darin zu sehen, eine Telekommunikations-Anschluss-Einheit mit einem Aufsteck-Modul zu erweitern, welches einen auslesbaren Speicher umfasst, in welchem eine Identifikationsinformation gespeichert werden kann, welche das Aufsteck-Modul und damit die TAE eindeutig identifiziert.

Mit anderen Worten betrifft die Erfindung eine Modifizierung einer TAE, welche die TAE in die Lage versetzt, sich selbst zu identifizieren. Eine erfindungsgemäß modifizierte TAE wird im Folgenden auch als smarte TAE bezeichnet. Besonders vorteilhaft ist der Speicher des Aufsteck-Moduls der smarten TAE sowohl mit einem Auslesegerät vor Ort als auch aus der Ferne auslesbar. Auf diese Weise kann schnell und auch automatisch erkannt werden, ob der jeweilige Anschluss zur Kundenlokation gehört.

Die Erfindung sieht dementsprechend ein Aufsteck-Modul zum Aufstecken auf eine Telekommunikations-Anschluss-Einheit (TAE) vor, welches wenigstens einen in eine Anschlussbuchse der Telekommunikations-Anschluss-Einheit einsteckbaren Anschluss-Stecker und einen über Anschlüsse des Anschluss-Steckers mittels eines externen Gerätes auslesbaren Datenspeicher mit einer darin speicherbaren Identifikationsinformation umfasst, wobei der Anschluss-Stecker eine Arretierungsvorrichtung aufweist, welche bei bestimmungsgemäßem Gebrauch nur ein einmaliges Aufstecken des Aufsteck-Moduls auf die Telekommunikations-Anschluss-Einheit ermöglicht und ein Entfernen des Aufsteck-Moduls von der Telekommunikations-Anschluss-Einheit verhindert.

Vorteilhaft ist die Arretierungsvorrichtung als federnd eindrückbare Verriegelungsnase ausgebildet, auch als Riegelnase bezeichnet, so dass das Aufsteck-Modul auf einfache Weise auf die TAE aufgesteckt werden kann, indem der Anschluss-Stecker in eine Anschlussbuchse der TAE eingesteckt wird. Die Arretierung erfolgt dabei dadurch, dass die Verriegelungsnase beim Einstecken des Anschluss-Steckers quer zur Einsteckrichtung eingedrückt wird und bei vollständig eingestecktem Anschluss-Stecker wieder in die ursprüngliche Position zurückfedert und in dieser Position einrastet, wobei eine Anlagefläche der Verriegelungsnase in eingerasteter Position an einer Anlagefläche der TAE anliegt, wobei die Anlagefläche der TAE beispielsweise eine innenliegende Gehäusefläche der TAE ist.

Insbesondere umfasst die Verriegelungsnase einen sich in Einsteckrichtung erstreckenden Abschnitt, welcher sich entgegen der Einsteckrichtung verdickt, so dass die Verriegelungsnase beim Einstecken des Anschluss-Steckers in die Anschlussbuchse der TAE dadurch eingedrückt wird, dass eine innenliegende Fläche der Anschlussbuchse eine Kraft quer zur Einsteckrichtung auf die Verdickung der Verrieglungsnase ausübt.

Die Verriegelungsnase weist ferner vorteilhaft an dem in Einsteckrichtung hinteren Ende wenigstens einen quer, insbesondere senkrecht, zur Einsteckrichtung angeordneten Arretierungsstift auf, wobei der wenigstens eine Arretierungsstift die oben genannte Anlagefläche der Verriegelungsnase in eingerasteter Position bildet.

Die oben genannte Einsteckrichtung bezeichnet jeweils die Richtung, in welcher der Anschluss-Stecker in die Anschlussbuchse der TAE eingesteckt wird.

Durch das einfache Aufstecken des Aufsteck-Moduls auf die TAE kann eine Installation vorteilhaft auch durch den Kunden eines Telekommunikationsanbieters erfolgen, d.h. durch den Nutzer des Teilnehmeranschlusses, an welchen die TAE angeschlossen ist.

Durch die Arretierung des Aufsteck-Moduls wird vorteilhaft erreicht, dass das Aufsteck-Modul nur einmalig auf eine TAE aufgesteckt und danach vorzugsweise nicht oder nur unter großem Aufwand wieder entfernt werden kann. Beispielsweise könnte vorgesehen sein, dass das Aufsteck-Modul nur mit einem speziell angepassten Werkzeug wieder entfernbar ist, auf welches nur Service-Personal des Telekommunikationsanbieters Zugriff hat, so dass der Kunde selbst das Aufsteck-Modul nicht zerstörungsfrei entfernen kann.

Auf diese Weise wird erreicht, dass eine einmal vorgenommene Zuordnung einer eindeutigen Identifikationsinformation zu einem Teilnehmeranschluss durch Aufstecken eines Aufsteck-Moduls, in dessen Datenspeicher die eindeutige Identifikationsinformation gespeichert ist, auf eine an den Teilnehmeranschluss angeschlossene TAE, nicht oder zumindest nicht vom Kunden selbst wieder rückgängig gemacht werden kann. Vorteilhaft ist das Aufsteck-Modul derart ausgebildet, dass es bei gewaltsamem Entfernen nicht wieder verwendbar ist.

**In** einer bevorzugten Ausführungsform ist der wenigstens eine Anschluss-Stecker des Aufsteck-Moduls zum Einstecken in wenigstens eine N-Buchse einer TAE ausgebildet. Zum Einstecken in eine TAE mit drei Anschlussbuchsen in NFN-Ausführung kann das Aufsteck-Modul beispielsweise einen Anschluss-Stecker zum Einstecken in eine der N-Buchsen oder zwei Anschluss-Stecker zum, insbesondere gleichzeitigen, Einstecken in beide N-Buchsen der TAE umfassen.

Je nach Einsatzzweck kann das Aufsteck-Modul ferner vorteilhaft zum Aufstecken auf eine als Unterputzdose ausgebildete TAE oder zum Aufstecken auf eine als Aufputzdose ausgebildete TAE ausgebildet sein. Denkbar ist auch, dass das Aufsteck-Modul zum wahlweisen Aufstecken auf eine als Unterputzdose oder auf eine als Aufputzdose ausgebildete TAE ausgebildet ist.

Vorteilhaft umfasst das Aufsteck-Modul eine Steuereinheit, mittels welcher der Datenspeicher auslesbar ist, wobei die Steuereinheit insbesondere dazu ausgebildet ist, in Antwort auf ein Aktivierungssignal, welches die Steuereinheit von dem externen Gerät empfängt, eine in dem Datenspeicher gespeicherte Identifikationsinformation an das externe Gerät zu übermitteln. Vorzugsweise ist die Steuereinheit dazu ausgebildet, in Antwort auf das Aktivierungssignal automatisch die im Datenspeicher gespeicherte Identifikationsinformation mittels eines strommodulierten Signals zu übermitteln. Zu diesem Zweck kann vorteilhaft als Aktivierungssignal von dem externen Gerät eine Spannung an die a- und b-Adern einer Teilnehmeranschlussleitung, an welche das Aufsteck-Modul angeschlossen ist, angelegt werden, wobei diese Spannung insbesondere oberhalb eines vorgegebenen Schwellwertes, insbesondere oberhalb einer Spannung von 60 V, insbesondere oberhalb einer Spannung von 64 V, liegt. Durch die angelegte Spannung kann die Steuereinheit aktiviert werden, wobei die Steuereinheit dann bei angelegter Spannung auf einfache Weise ein strommoduliertes Signal beispielsweise mittels wenigstens eines schaltbaren Widerstands erzeugen kann.

Zu diesem Zweck umfasst das Aufsteck-Modul vorteilhaft eine elektronische Schaltung mit zwei Anschlüssen zum Anschließen an die a- und b-Adern einer Teilnehmeranschlussleitung, wobei die elektronische Schaltung dazu ausgebildet ist, die Steuereinheit zu aktivieren, wenn an die Anschlüsse der elektronischen Schaltung eine Spannung oberhalb eines vorgegebenen Schwellwertes, insbesondere oberhalb einer Spannung von 60 V, insbesondere oberhalb einer Spannung von 64 V, angelegt wird. Vorteilhaft kann die elektronische Schaltung einen DIAC oder mehrere in Reihe geschaltete DIACs umfassen, deren Durchbruchspannung den Schwellwert der Spannung bestimmt, oberhalb dessen die Steuereinheit aktiviert wird, wobei die Aktivierung insbesondere dadurch erfolgt, dass die Steuereinheit mit einer Betriebsspannung versorgt wird, wenn der oder die DIACs leitfähig werden.

In einer besonders vorteilhaften Ausführungsform des Aufsteck-Moduls ist die Steuereinheit als Mikrocontroller ausgebildet, wobei insbesondere der Mikrocontroller und der Datenspeicher in einem gemeinsamen integrierten Chip (IC) angeordnet sind, wobei der integrierte Chip insbesondere Bestandteil der elektronischen Schaltung ist.

Zum Erzeugen eines strommodulierten Signals umfasst die elektronische Schaltung vorzugsweise wenigstens einen ersten und einen zweiten Widerstand, wobei der erste Widerstand derart angeordnet ist, dass durch diesen ein elektrischer Strom zwischen den Anschlüssen der elektronischen Schaltung fließt, wenn an die Anschlüsse der elektronischen Schaltung eine Spannung oberhalb eines vorgegebenen Schwellwertes angelegt wird, und wobei der zweite Widerstand, gesteuert durch die Steuereinheit, parallel zum ersten Widerstand schaltbar ist, um die Stromstärke des zwischen den Anschlüssen der elektronischen Schaltung fließenden Stroms zu variieren.

Um eine wechselseitige Störung des Betriebs der in dem Aufsteck-Modul angeordneten elektronischen Schaltung und einer Datenübertragung zwischen der Vermittlungsstelle und eines an die TAE angeschlossenen Teilnehmerendgerätes zu vermeiden oder zu reduzieren, sind in der elektronischen Schaltung vorteilhaft geeignete Komponenten zur Unterdrückung von Störsignalen vorgesehen. Insbesondere wird dadurch eine Beeinflussung einer DSL-Datenübertragung durch die in dem Aufsteck-Modul angeordnete elektronische Schaltung vermieden. Zu diesem Zweck können vorteilhaft passive Filter vorgesehen sein, welche beispielsweise eine Kombination von Widerständen, Spulen und/oder Kondensatoren umfassen können. Vorteilhaft kann beispielsweise ein RL-Filter vorgesehen sein, welcher eine Induktivität und einen Widerstand umfasst. Denkbar ist auch der Einsatz anderer an sich bekannter Filter.

Die elektronische Schaltung kann ferner vorteilhaft einen Gleichrichter umfassen, wobei dieser insbesondere dazu dient, die Funktionsfähigkeit der Schaltung unabhängig von der Polung der von dem externen Gerät an die Anschlüsse der elektronischen Schaltung angelegten Spannung zu gewährleisten.

Das Aufsteck-Modul kann vorteilhaft zum Aufstecken auf eine vom Netzbetreiber als 1. TAE bereitgestellte Telekommunikations-Anschluss-Einheit ausgebildet sein, wobei die 1. TAE einen Netzabschluss bildet und einen passiven Prüfabschluss (PPA) umfasst, wobei bei aufgestecktem Aufsteck-Modul die elektronische Schaltung und der passive Prüfabschluss parallelgeschaltet sind.

Denkbar ist auch, das die elektronische Schaltung des Aufsteck-Moduls einen passiven Prüfabschluss umfasst, welcher den PPA in einer 1. TAE ersetzt, wobei bei Nachrüsten der 1. TAE mit dem Aufsteck-Modul der zuvor in der 1. TAE vorgesehene PPA entfernt wird. Durch die Integration des PPA in die elektronische Schaltung des Aufsteck-Moduls kann in der Regel vorteilhaft für das Aufsteck-Modul benötigter Platz eingespart werden.

Das Aufsteck-Modul kann aber auch vorteilhaft ein Gehäuse umfassen, welches insbesondere zum Austausch eines Gehäuses der Telekommunikations-Anschluss-Einheit ausgebildet ist, auf welche das Aufsteck-Modul aufgesteckt werden soll. Bei Aufstecken des Aufsteck-Moduls auf eine als Unterputzdose ausgebildete TAE kann das Gehäuse des Aufsteck-Moduls auch vorteilhaft das Gehäuse der TAE bilden.

Die bei Kunden bereits installierten TAEs jeweils mit einem erfindungsgemäßen Aufsteck-Modul nachzurüsten, statt alle bereits im Netz befindlichen TAE-Dosen gegen TAE-Dosen auszutauschen, welche die Funktionalität eines erfindungsgemäßen Aufsteck-Moduls umfassen, bietet eine Reihe von Vorteilen. Insbesondere kann auf diese Wiese ein sonst anfallender erheblicher personeller Aufwand eingespart werden, da das Aufsteck-Modul in der Regel durch den Kunden selbst installiert werden kann. Ferner können Produktionskosten eingespart und der Abfall, der durch die Entsorgung ausgetauschter TAEs anfallen würde, vermieden werden.

Die Erfindung sieht ferner ein Auslesegerät zum Auslesen eines Datenspeichers eines oben beschriebenen Aufsteck-Moduls vor, welches dazu ausgebildet ist, an Anschlüsse des Anschluss-Steckers des Aufsteck-Moduls eine Spannung oberhalb eines vorgegebenen Schwellwertes, insbesondere oberhalb einer Spannung von 60 V, insbesondere oberhalb einer Spannung von 64 V, anzulegen.

Das Auslesegerät kann ein entferntes Gerät sein, welches über eine Teilnehmeranschlussleitung mit einer TAE verbindbar ist, in welcher das Aufsteck-Modul eingesteckt ist, beispielsweise ein vermittlungsseitig angeordneter MSAN oder DSLAM. Alternativ kann das Auslesegerät auch ein lokal mit dem Aufsteck-Modul verbindbares Gerät sein, wobei das Auslesegerät insbesondere mit einer Anschlussbuchse der TAE verbindbar ist, in welcher das Aufsteck-Modul eingesteckt ist.

Zum Ermitteln der in dem Datenspeicher des Aufsteck-Moduls gespeicherten Identifikationsinformation ist das Auslesegerät vorteilhaft dazu ausgebildet, von dem Aufsteck-Modul ein strommoduliertes Signal zu empfangen und aus diesem eine Identifikationsinformation zu ermitteln.

Die Erfindung sieht ferner ein Verfahren zur Identifikation eines Aufsteck-Moduls vor, für welches ein oben beschriebenes Aufsteck-Modul bereitgestellt wird. Vor Installation des Aufsteck-Moduls durch Aufstecken auf eine mit einem Teilnehmeranschluss verbundene Telekommunikations-Anschluss-Einheit wird in dem Datenspeicher des Aufsteck-Moduls eine eindeutige Identifikationsinformation gespeichert. Das Speichern der eindeutigen Identifikationsinformation in dem Datenspeicher erfolgt vorteilhaft bereits durch den Hersteller des Aufsteck-Moduls. Denkbar ist jedoch auch, die eindeutige Identifikationsinformation zu einem späteren Zeitpunkt über eine geeignete Schnittstelle in dem Datenspeicher zu speichern.

Das Verfahren zur Identifikation des Aufsteck-Moduls sieht ferner vor, eine in dem Aufsteck-Modul angeordnete Steuereinheit zu aktivieren, indem von einem Auslesegerät, wie es oben beschrieben wurde, ein Aktivierungssignal zu der Steuereinheit übertragen wird, wobei das Auslesegerät mit den Anschlüssen des wenigstens einen Anschluss-Steckers des Aufsteck-Moduls verbunden ist. Das Verfahren sieht ferner vor, dass in Antwort auf die Aktivierung durch die Steuereinheit automatisch ein in Abhängigkeit der in dem Datenspeicher gespeicherten Identifikationsinformation erzeugtes Signal von dem Aufsteck-Modul zu dem verbundenen Auslesegerät übertragen wird, und das verbundene Auslesegerät das Signal empfängt und aus dem empfangenen Signal die Identifikationsinformation ermittelt.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Abbildung eines typischen Aufbaus eines Teilnehmeranschlusses, welcher über eine Teilnehmeranschlussleitung mit einer Vermittlungsstelle eines Netzbetreibers verbunden ist, und bei welchem eine Telekommunikations-Anschluss-Einheit mit einem Aufsteck-Modul ausgerüstet ist,
- Fig. 2:: schematisch die Abbildung eines passiven Prüfabschlusses einer Telekommunikations-Anschluss-Einheit,
- Figuren 3a und 3b:: eine schematische Abbildung einer bevorzugten Ausführungsform einer in einem Aufsteck-Modul angeordneten elektronischen Schaltung,
- Fig. 4:: ein schematisches und idealisiertes Diagramm eines zeitlichen Verlaufs der Stromstärke eines nach Aktivieren der Steuereinheit der in den Figuren 3a und 3b dargestellten elektronischen Schaltung fließenden Stroms, und
- Fig. 5:: eine schematische und idealisierte Detailansicht des in Fig. 4 dargestellten Verlaufs der Stromstärke,
- Fig. 6:: schematisch eine als Unterputzdose ausgebildete TAE,
- Fig. 7: die in Fig. 6 schematisch dargestellte TAE mit einem aufgesteckten Aufsteck-Modul in einer ersten bevorzugten Ausführungsform,
- Fig. 8: schematisch eine Ausführungsform eines Anschluss-Steckers mit einer federnd eindrückbaren Verriegelungsnase,
- Fig. 9: schematisch eine zweite bevorzugte Ausführungsform eines Aufsteck-Moduls,
- Fig. 10: schematisch eine dritte bevorzugte Ausführungsform eines Aufsteck-Moduls,
- Fig. 11:: schematisch eine vierte bevorzugte Ausführungsform eines Aufsteck-Moduls, und
- Fig. 12:: schematisch ein beispielhaftes Austauschgehäuse.

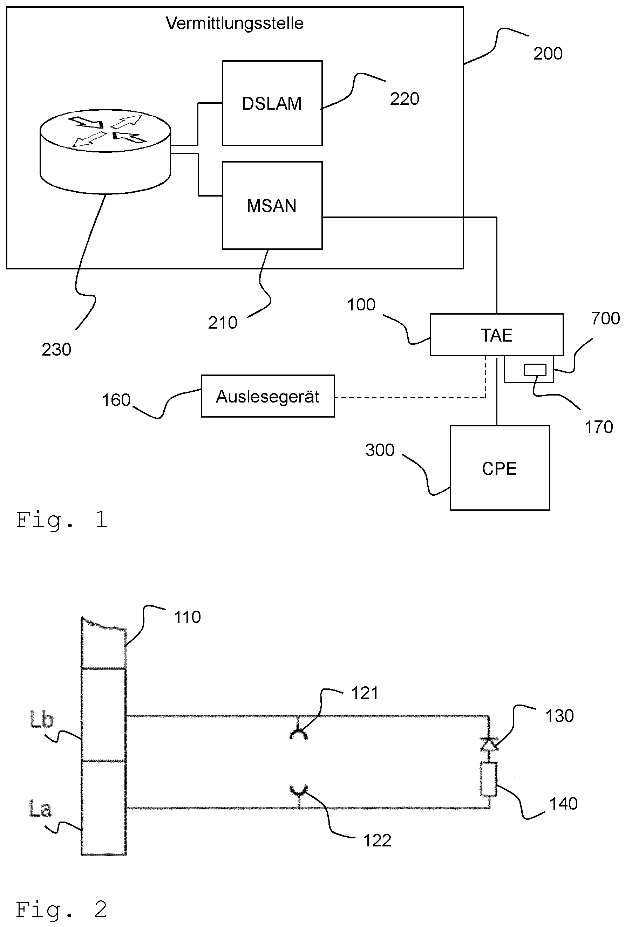

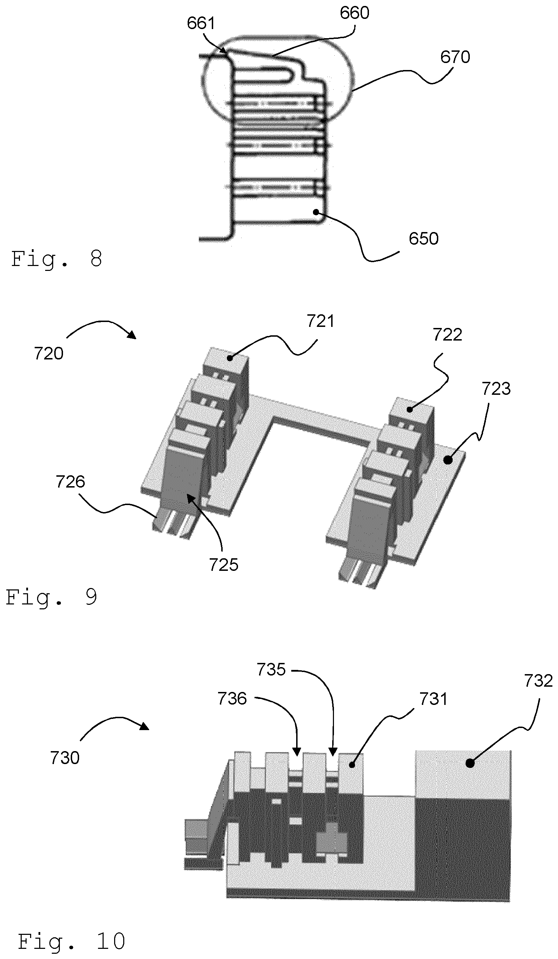

In Fig. 1 ist schematisch eine Telekommunikations-Anschluss-Einheit 100 dargestellt, wobei diese durch Aufstecken eines Aufsteck-Moduls 700 zu einer smarten TAE modifiziert ist, wobei das Aufsteck-Modul 700 einen Datenspeicher 170 zur Speicherung einer eindeutigen Identifikationsinformation aufweist, sowie wenigstens einen Anschluss-Stecker zum Einstecken in wenigstens eine Anschlussbuchse der TAE 100, wobei die TAE 100 beispielsweise als NFN-Anschlussdose ausgebildet ist und der Anschluss-Stecker zum Einstecken in wenigstens eine N-kodierte Anschlussbuchse der TAE 100 ausgebildet ist. Entsprechende Anschluss-Stecker 721 und 722 bzw. 731 sind beispielhaft in den Figuren 9 und 10 dargestellt.

Im dargestellten Beispiel ist die TAE 100 als 1. TAE an einem Teilnehmeranschluss installiert und über die Teilnehmeranschlussleitung 250 mit einem MSAN (Multi-Service Access Node) 210 in der Vermittlungsstelle 200 eines Netzbetreibers verbunden. Der MSAN 210 verbindet die Teilnehmeranschlussleitung 250 mit dem Kernnetz des Netzbetreibers und wickelt die für eine an den TAE 100 teilnehmerseitig angeschlossene Kommunikationsvorrichtung, wie zum Beispiel ein Teilnehmerendgerät 300, jeweils vorgesehene Kommunikation mit dem jeweiligen Protokoll ab, beispielsweise über das Telefonnetz oder das Internet. Alternativ könnte die Teilnehmeranschlussleitung beispielsweise auch an einem DSLAM 220 angeschlossen sein. In der dargestellten Vermittlungsstelle 200 sind nur beispielhaft ein DSLAM 220 und ein MSAN 210 dargestellt, welche mit einem Breitband-Zugangsserver BRAS (Broadband Remote Access Server) 230, auch als BNG (Broadband Network Gateway) bezeichnet, verbunden sind. Typischerweise sind in einer Vermittlungsstelle 200 eine Mehrzahl DSLAMs und/oder MSANs angeordnet. Auch könnte der MSAN, welcher den vermittlungsseitigen Leitungsabschluss der Teilnehmeranschlussleitung 250 bildet, als Outdoor-MSAN in einem Kabelverzweiger angeordnet sein.

Um ein Aufsteck-Modul und damit eine Telekommunikations-Anschluss-Einheit zu identifizieren, und insbesondere um zu prüfen, ob ein Teilnehmeranschluss zu einer Kundenlokation gehört, sieht die Erfindung vor, ein Aufsteck-Modul 700 bereitzustellen, in dem Datenspeicher 170 des Aufsteck-Moduls 700 eine eindeutige Identifikationsinformation, kurz ID, zu speichern, und das Aufsteck-Modul 700 mit gespeicherter ID auf eine an einem Teilnehmeranschluss installierte Telekommunikations-Anschluss-Einheit (TAE) 100 aufzustecken.

Die TAE 100 umfasst Anschlusskontakte zum Anschließen an die Teilnehmeranschlussleitung 250, sowie wenigstens eine Anschlussbuchse zum Anschließen einer teilnehmerseitigen Kommunikationsvorrichtung, wie zum Beispiel dem dargestellten Teilnehmerendgerät 300. Der Datenspeicher 170, und insbesondere die in dem Datenspeicher 170 gespeicherte eindeutige Identifikationsinformation, ist mittels eines externen Gerätes auslesbar. Die im Datenspeicher 170 gespeicherte Identifikationsinformation dient vorzugsweise dazu, das Aufsteck-Modul 700 und damit die TAE 100 eindeutig zu identifizieren, wobei die eindeutige Identifikationsinformation vorteilhaft bereits vom Hersteller des Aufsteck-Moduls 700 in dem Datenspeicher 170 gespeichert wird.

Im dargestellten Ausführungsbeispiel könnte als externes Gerät der MSAN 210 eingesetzt werden, welcher über die Anschlusskontakte der TAE 100 und über die Teilnehmeranschlussleitung 250 mit der TAE 100 verbunden ist. Alternativ könnte als externes Gerät auch ein Auslesegerät 160 eingesetzt werden, welches lokal über eine Anschlussbuchse der TAE 100 mit der TAE 100 verbindbar ist. Bei einer TAE, welche an den DSLAM 220 angeschlossen ist, könnte auch der DSLAM 220 als externes Gerät eingesetzt werden.

Die in Fig. 1 beispielhaft dargestellte TAE 100 wird als 1. TAE eingesetzt und umfasst vorteilhaft einen passiven Prüfabschluss (PPA). In Fig. 2 ist die elektrische Ausführung eines solchen an sich bekannten passiven Prüfabschlusses (PPA) schematisch dargestellt. Der PPA besteht aus einer Reihenschaltung einer Diode 130 und eines Widerstandes 140 mit einem Widerstandswert von typischerweise 470 kΩ, wobei die Reihenschaltung zwischen die Anschlusskontakte La und Lb einer TAE geschaltet ist. Die Anschlusskontakte La und Lb dienen zum Anschließen der a- bzw. b-Ader einer als Zweidrahtleitung ausgebildeten Teilnehmeranschlussleitung und sind im dargestellten Ausführungsbeispiel innerhalb einer Anschlussleiste 110 angeordnet. Ferner sind in Fig. 2 Kontakte 121 und 122 einer Anschlussbuchse der TAE dargestellt, welche jeweils mit dem Anschlusskontakt La bzw. Lb verbunden sind, wobei die Anschlussbuchse zum Anschließen einer teilnehmerseitigen Kommunikationsvorrichtung dient.

Um mit Hilfe des externen Gerätes die im Datenspeicher 170 gespeicherte Identifikationsinformation auszulesen, umfasst das Aufsteck-Modul 700 vorteilhaft eine Steuereinheit, die dazu ausgebildet ist, in Antwort auf ein Aktivierungssignal, welches die Steuereinheit von dem externen Gerät, d.h. beispielsweise von dem Auslesegerät 160 oder dem MSAN 210, empfängt, eine in dem Datenspeicher gespeicherte Identifikationsinformation an das externe Gerät zu übermitteln. In einer besonders bevorzugten Ausführungsform wird von dem externen Gerät als Aktivierungssignal eine Spannung an Anschlüsse der TAE 100 angelegt, insbesondere eine Gleichspannung oberhalb eines vorgegebenen Schwellwertes, insbesondere oberhalb von 60 V, insbesondere oberhalb von 64 V, wobei diese Spannung an zwei Anschlüsse der TAE 100 angelegt wird, von denen je einer mit der a- bzw. b-Ader der Teilnehmeranschlussleitung 250 verbunden ist.

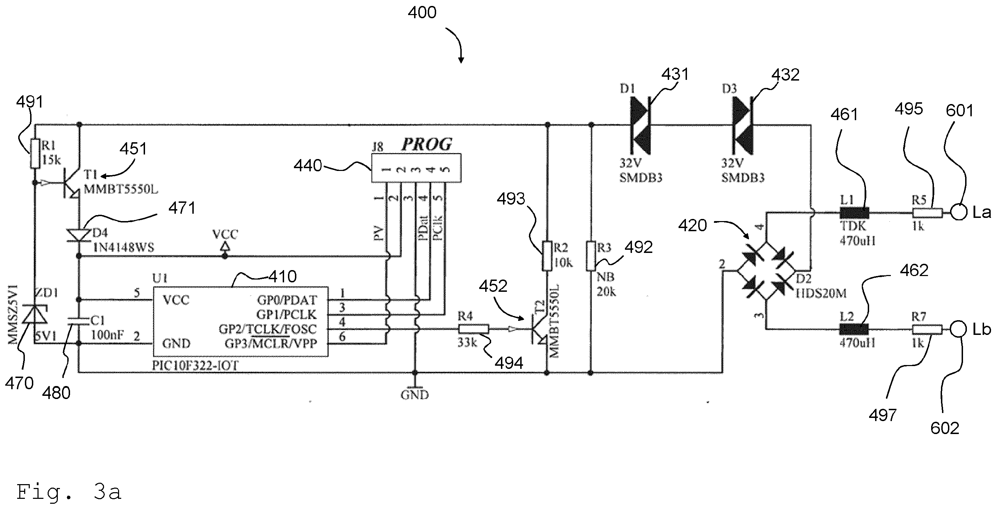

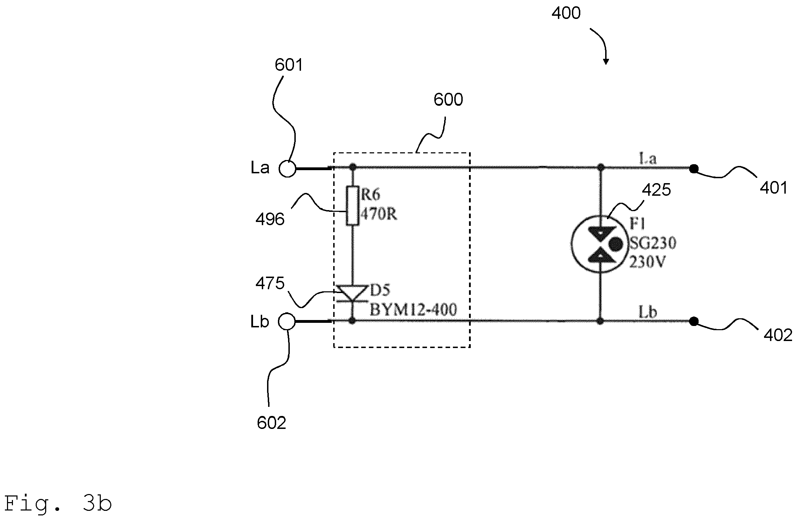

Das Aufsteck-Modul 700 umfasst besonders vorteilhaft die in den Figuren 3a und 3b schematisch dargestellte elektronische Schaltung 400, welche die Anschlüsse 401 und 402 zum Anschließen an die a- und b-Adern der Teilnehmeranschlussleitung 250 umfasst. Die Figuren 3a und 3b zeigen jeweils einen Teil der elektronischen Schaltung in schematischer Darstellung, wobei die Schaltungsteile jeweils an den mit den Bezugszeichen 601 und 602 bezeichneten Punkten verbunden sind. Die Anschlüsse 401 und 402 der elektronischen Schaltung 400 des Aufsteck-Moduls 700 sind derart mit Kontakten des wenigstens einen Anschluss-Steckers des Aufsteck-Moduls 700 verbunden, dass bei aufgestecktem Aufsteck-Modul 700 der Anschluss 401 mit der a-Ader der Teilnehmeranschlussleitung 250 und der Anschluss 402 mit der b-Ader der Teilnehmeranschlussleitung 250 verbunden ist.

Der oder die Anschlussstecker des Aufsteck-Moduls sind vorteilhaft derart ausgestaltet, dass bei Einstecken des Anschlusssteckers in die jeweilige Anschlussbuchse der TAE 100 die interne Verschaltung der TAE 100 nicht geändert wird, d.h. insbesondere dass Anschlüsse, die bei nicht eingestecktem Anschlussstecker elektrisch verbunden sind, auch bei eingestecktem Anschlussstecker elektrisch verbunden bleiben. Dies ist vorteilhaft, da der Anschlussstecker des Aufsteck-Moduls dazu dient, die Anschlüsse 401 bzw. 402 der elektronischen Schaltung 400 mit der a- bzw. b-Ader zu verbinden, ohne dass das Durchschleifen einer Ader unterbunden werden soll.

Insbesondere sind zu diesem Zweck bei dem wenigstens einen Anschluss-Stecker die Anschlusskontakte für a1 und a2, sowie für b1 und b2 innerhalb des Anschluss-Steckers miteinander elektrisch verbunden, d.h. bei üblicher Nummerierung der Anschlussbelegung eines TAE-Anschluss-Steckers die Anschlüsse 1 und 6, sowie 2 und 5.

Es sei angemerkt, dass in den Figuren 3a und 3b zusätzlich zu den Bezugszeichen auf übliche Weise Parameterwerte und/oder Typbezeichnungen der eingesetzten Komponenten zur detaillierten Veranschaulichung angegeben sind.

Die elektronische Schaltung 400 umfasst als Steuereinheit einen integrierten Chip 410, wobei im dargestellten Ausführungsbeispiel ein Chip vom Typ PIC10F322-IOT eingesetzt wird. Der Chip 410 umfasst im dargestellten Ausführungsbeispiel auch den Datenspeicher 170, d.h. die Identifikationsinformation ist in einem Speicher des Chips 410 gespeichert. Im dargestellten Ausführungsbeispiel ist der Datenspeicher 170 insbesondere als Flash-Speicher des Chips 410 ausgebildet. Im Flash-Speicher des Chips 410 ist insbesondere auch ein von dem Prozessor des Chips 410 ausführbares Programm, umfassend vom Prozessor ausführbare Anweisungen, gespeichert, so dass im dargestellten Ausführungsbeispiel der Datenspeicher 170 auch als Programmspeicher fungiert. Das gespeicherte Programm wird vorzugsweise automatisch ausgeführt, sobald der Chip 410 durch Anlegen einer Betriebsspannung aktiviert wird, wobei das Programm auf die in dem Datenspeicher 170 gespeicherte Identifikationsinformation zugreifen kann.

Die elektronische Schaltung 400 ist dazu ausgebildet, die Steuereinheit, d.h. den Chip 410 zu aktivieren, wenn an die Anschlüsse 401 und 402 eine Spannung oberhalb eines vorgegebenen Schwellwertes, insbesondere oberhalb einer Spannung von 60 V, insbesondere oberhalb einer Spannung von 64 V, angelegt wird.

Die Steuereinheit des Aufsteck-Moduls 700, d.h. in der dargestellten Ausführungsform der Chip 410, ist dazu ausgebildet, in Antwort auf ein Aktivierungssignal, d.h. insbesondere in Antwort auf eine an die Anschlüsse 401 und 402 der elektronischen Schaltung 400 angelegte Spannung, eine in dem Datenspeicher 170 gespeicherte Identifikationsinformation an das externe Gerät 160 bzw. 210, vorzugsweise mittels eines strommodulierten Signals, zu übermitteln. Zu diesem Zweck umfasst die elektronische Schaltung 400 wenigstens einen ersten und einen zweiten Widerstand 492 und 493, wobei der erste Widerstand 492 derart angeordnet ist, dass durch diesen ein elektrischer Strom zwischen den Anschlüssen 401 und 402 der elektronischen Schaltung 400 fließt, wenn an die Anschlüsse 401 und 402 der elektronischen Schaltung 400 eine Spannung oberhalb eines vorgegebenen Schwellwertes angelegt wird, und wobei der zweite Widerstand 493, gesteuert durch die Steuereinheit 410, parallel zum ersten Widerstand 492 schaltbar ist, um die Stromstärke des zwischen den Anschlüssen 401 und 402 der elektronischen Schaltung 400 fließenden Stroms zu variieren. Im dargestellten Ausführungsbeispiel umfasst die elektronische Schaltung zum Parallelschalten des Widerstands 493 einen Transistor 452, welcher von einem Ausgangsanschluss des Chips 410 über den Widerstand 494 angesteuert wird.

Die Telekommunikations-Anschluss-Einheit 100 kann eine vom Netzbetreiber bereitgestellte 1. TAE sein, wobei die Telekommunikations-Anschluss-Einheit 100 einen Netzabschluss bildet und insbesondere einen passiven Prüfabschluss (PPA) umfasst, wie er in Fig. 2 dargestellt ist. Es kann vorteilhaft vorgesehen sein, den in der TAE 100 enthaltenen PPA zu entfernen, wenn die TAE 100 durch Aufstecken des Aufsteck-Moduls 700 modifiziert wird. In diesem Fall ist ein passiver Prüfabschluss 600 als Bestandteil der elektronischen Schaltung 400 vorgesehen, wie in den Figuren 3a und 3b dargestellt. Alternativ könnte aber auch eine elektronische Schaltung 400 vorgesehen werden, welche die in den Figuren 3a und 3b dargestellten Komponenten bis auf den PPA 600 umfasst, wobei dann die elektronische Schaltung und der in der TAE 100 enthaltene PPA parallel an die Anschlüsse der TAE 100 zum Anschließen der a-und b-Ader der Teilnehmeranschlussleitung geschaltet sind.

Wenn das Aufsteck-Modul zum Aufstecken auf eine TAE vorgesehen ist, welche nicht als 1. TAE ausgebildet ist, so kann ebenfalls in der elektronischen Schaltung 400 vorteilhaft der PPA 600 werggelassen werden.

Im Folgenden wird die Funktionsweise der in den Figuren 3a und 3b schematisch dargestellten elektronischen Schaltung nochmals näher erläutert.

Die DIACs 431 und 432 haben im dargestellten Ausführungsbeispiel jeweils eine Durchbruchsspannung von 32 V, so dass die Reihenschaltung der beiden DIACs erst bei einer Spannung über 64 V leitfähig wird. Wird an die Anschlüsse 401 und 402 der elektronischen Schaltung 400 vom MSAN 210 über die Teilnehmeranschlussleitung 250 eine Speisespannung in Form einer Gleichspannung von üblicherweise 60 V angelegt, so schalten dementsprechend die DIACs nicht durch.

Sofern vorgesehen, arbeitet der passive Prüfabschluss 600 bei Anlegen einer üblichen Speisespannung von 60 V jedoch auf herkömmliche Weise, d.h. bei vermittlungsseitigem Umpolen der Speisespannung derart, dass der Anschluss 401 an Pluspotential und der Anschluss 402 an Minuspotential liegt, ist die Diode 475 des passiven Prüfabschlusses 600 leitend und es fließt ein elektrischer Strom durch den Widerstand 496, wodurch der Vermittlungsstelle ermöglicht wird, den Widerstand 496 des PPA 600 und damit auch den Widerstand der Teilnehmeranschlussleitung zu messen.

Wird jedoch eine Gleichspannung an die Anschlüsse 401 und 402 angelegt, die oberhalb eines vorgegebenen Grenzwertes liegt, so wird eine Steuereinheit des Aufsteck-Moduls 700, im dargestellten Ausführungsbeispiel der Chip 410, aktiviert. Im dargestellten Ausführungsbeispiel ist der Grenzwert durch die Dimensionierung der DIACs 431 und 432 vorgegeben und beträgt 64 V. Bei einer Speisespannung oberhalb dieses Grenzwertes werden die DIACs 431 und 432 leitfähig, wodurch der Chip 410 mit einer Betriebsspannung versorgt wird. Vorteilhaft umfasst die elektronische Schaltung 400 einen Gleichrichter 420, so dass der Chip 410 bei einer an die Anschlüsse 401 und 402 angelegten Gleichspannung oberhalb des Grenzwertes unabhängig von der Polung der angelegten Spannung aktiviert wird.

Der Widerstand 491, der Transistor 451, die Zenerdiode 470, der Kondensator 480 und die Diode 471 bilden eine Schaltung zur Regelung der Betriebsspannung des Chips 410, wobei die Sollgröße der Regelschaltung durch die Durchbruchspannung der in Sperrrichtung geschalteten Zenerdiode 470 bestimmt wird und die Regelung mittels des Transistors 451 erfolgt, und wobei der Kondensator 480 als Glättungskondensator dient.

Vorteilhaft umfasst die elektronische Schaltung 400 ferner einen Überspannungsschutz. Zu diesem Zweck ist vorzugsweise ein zwischen den Anschlüssen 401 und 402 angeordneter Überspannungsableiter 425 vorgesehen, welcher im dargestellten Ausführungsbeispiel als zweipoliger Gasableiter ausgebildet ist.

Die Widerstände 495 und 497 und die Induktivitäten 461 und 462 dienen der Vermeidung von wechselseitigen Störungen zwischen der elektronischen Schaltung 400 und einer Datenübertragung, die zwischen der Vermittlungsstelle und dem an die TAE 100 angeschlossenen Teilnehmerendgerät 300 über die Teilnehmeranschlussleitung 250 stattfindet, insbesondere zum Ausschluss einer DSL-Beeinflussung.

Wie oben beschrieben wird zum Auslesen der gespeicherten ID eine in dem Aufsteck-Modul 700 angeordnete Steuereinheit, d.h. beispielsweise der Chip 410, aktiviert, wobei dies durch ein Aktivierungssignal erfolgt, welches der Steuereinheit von einem Auslesegerät bereitgestellt wird, wobei als Auslesegerät insbesondere ein über die Teilnehmeranschlussleitung 250 mit den Anschlusskontakten 401 und 402 verbundener MSAN 210 eingesetzt werden kann, oder ein lokal an eine Anschlussbuchse der TAE 100 angeschlossenes Auslesegerät 160. Das lokal angeschlossene Auslesegerät 160 ist dabei mit den Anschlusskontakten 401 und 402 über eine an sich bekannte interne Verschaltung zwischen den Anschlussbuchsen der TAE 100 verbunden, insbesondere zwischen den Anschlussbuchsen, auf welche einerseits das Aufsteck-Modul aufgesteckt ist an welche andererseits das Auslesegerät 160 angeschlossen ist.

In Antwort auf die Aktivierung erzeugt die Steuereinheit, d.h. im dargestellten Ausführungsbeispiel der Chip 410, automatisch und in Abhängigkeit der in dem Datenspeicher gespeicherten Identifikationsinformation ein Signal, welches von dem Aufsteck-Modul 700 zu dem verbundenen Auslesegerät 210 bzw. 160 übermittelt wird. Das verbundene Auslesegerät empfängt das Signal und wertet dieses aus, um die im Signal enthaltene Identifikationsinformation zu ermitteln.

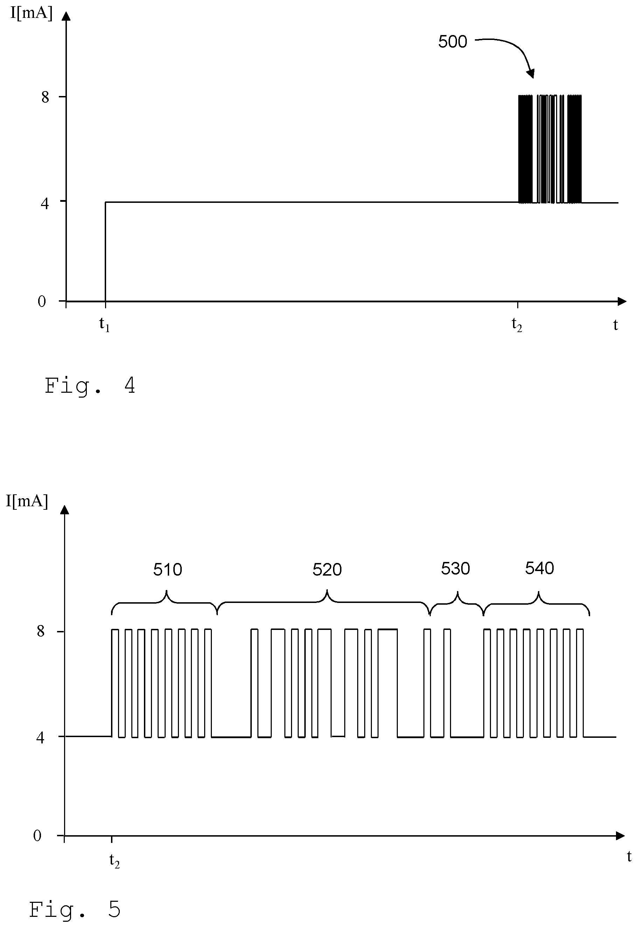

Im Folgenden wird die Signalübermittlung in Verbindung mit den Figuren 4 und 5 näher erläutert.

Es sei angenommen, dass an die Anschlüsse 401 und 402 der elektronischen Schaltung 400 von einem mit den Anschlüssen 401 und 402 verbundenen externen Gerät, insbesondere durch den MSAN 210 oder das Auslesegerät 160, eine Gleichspannung angelegt wird. Wird die Spannung durch den MSAN 210 bereitgestellt, so ist die zwischen den Anschlüssen 401 und 402 anliegende Spannung auch abhängig vom internen Widerstand des MSAN 210 sowie vom Leitungswiderstand der Teilnehmeranschlussleitung 250. An unterschiedlichen Teilnehmeranschlüssen kann sich daher bei gleicher Spannung, die vom MSAN 210 bereitgestellt wird, die zwischen den Anschlüssen 401 und 402 anliegende Spannung unterscheiden. Ferner sei angenommen, dass das Minuspotential der angelegten Gleichspannung an dem Anschluss 401 und das Pluspotential der angelegten Gleichspannung an dem Anschluss 402 anliegt. Dies entspricht der üblichen Polung der Speisespannung und der Sperrrichtung des PPA 600.

Aufgrund der DIACs 431 und 432 beginnt nun erst ab einer bestimmten Spannungsschwelle ein gewisser Strom durch den Widerstand 492 zu fließen, wobei im dargestellten Ausführungsbeispiel die Schwellspannung bei 64 V liegt. Liegt beispielsweise zwischen den Anschlüssen 401 und 402 eine Gleichspannung von 80 V an, so fließt zunächst ein elektrischer Strom zwischen den Anschlüssen 401 und 402, dessen Stromstärke maßgeblich durch den Wert des Widerstandes 492 bestimmt wird. Im dargestellten Beispiel hat der Widerstand 492 einen Wert von 20 kΩ, so dass zunächst ein Strom mit einer Stromstärke von etwa 4 mA fließt.

Dieser Stromfluss kann von dem externen Gerät detektiert werden und bildet somit bereits einen ersten Teil einer Prüfung eines Teilnehmeranschlusses. Gleichzeitig wird, wie oben beschrieben, der Chip 410 durch Bereitstellen einer Betriebsspannung an dem mit VCC gekennzeichneten Anschluss des Chips 410 aktiviert, wodurch der in dem Chip 410 enthaltene Mikrocontroller ein in dem Speicher des Chips 410 gespeichertes Programm ausführt.

Das Ausführen des gespeicherten Programms bewirkt, dass nach Ablauf einer vorgegebenen Wartezeit der Mikrocontroller des Chips 410 abhängig von einer Datenfolge den Widerstand 493 parallel zum Widerstand 492 schaltet, so dass sich bei parallel geschaltetem Widerstand 493 der Stromfluss in etwa auf eine Stromstärke von 12 mA verdreifacht, da im dargestellten Ausführungsbeispiel der Widerstand 493 einen Wert von 10 kΩ hat. Ein Stromfluss von 12 mA entspricht dann einem High-Pegel und ein Stromfluss von 4 mA einem Low-Pegel. Das Parallelschalten des Widerstandes 493 durch den Chip 410 erfolgt mittels des Transistors 452, welcher durch ein Signal an einem Ausgang des Chips 410 angesteuert wird.

In Abhängigkeit der vorgegebenen Datenfolge wird der Stromfluss derart gesteuert, dass ein High-Pegel einem binären Wert 1 der Datenfolge und ein Low-Pegel einem binären Wert 0 der Datenfolge entspricht, wobei die Datenfolge die in dem Datenspeicher der TAE 100 gespeicherte Identifikationsinformation umfasst. Die Datenfolge kann vorteilhaft weitere Informationen, insbesondere Synchronisations- und Prüfdaten umfassen.

Die absoluten Stromwerte sind bei einfacher Auslegung mit Widerständen proportional abhängig von der an dem Aufsteck-Modul 700 verfügbaren Spannung, die ja aufgrund der großen Leitungslängenvarianz sehr unterschiedlich sein kann. Die Prüfung bzw. Auswertung der Stromwerte durch das externe Gerät, d.h. zum Beispiel durch den MSAN 210 oder das Auslesegerät 160, erfolgt daher vorteilhaft bezogen auf relative Werte und nicht auf absolute Werte der Stromstärke. Auf diese Weise kann der Aufbau der elektronischen Schaltung 400 einfach gehalten werden, wodurch auf vorteilhafte Weise eine geringere Größe der elektronischen Schaltung 400 und damit auch geringere Kosten ermöglicht werden, als dies bei einer definierten Stromregelung mit absoluten Größen möglich wäre.

Fig. 4 zeigt schematisch und in idealisierter Form den zeitlichen Verlauf der Stromstärke nach Einschalten einer Spannung oberhalb der vorgegebenen Schwellspannung zum Zeitpunkt t₁, wobei beispielsweise eine Gleichspannung von 80 V an die Anschlüsse 401 und 402 der elektronischen Schaltung 400 angelegt wird.

Es fließt beispielsweise zunächst ein Strom von 4 mA, d.h. ein Strom auf dem Low-Pegel. Die binäre Datenübertragung der Datenfolge 500 beginnt nach einer vorgegebenen Wartezeit von beispielsweise 500 Millisekunden zum Zeitpunkt t₂, d.h. t₂ - t₁ = 500 ms. Die Wartezeit wird beispielsweise mit Hilfe eines in dem Chip 410 integrierten Timers bewirkt.

In Fig. 5 ist der Stromverlauf zur Übertragung der Datenfolge 500 ab dem Zeitpunkt t₂ nochmals im Detail schematisch dargestellt, wobei ein idealisiertes Rechtecksignal dargestellt ist, welches den prinzipiellen Verlauf wiedergibt. Der reale Stromverlauf weicht von dem dargestellten ideal rechteckigen Verlauf ab und wird beispielsweise auch durch das kapazitive und induktive Verhalten der Übertragungsleitungen bestimmt.

Zur Synchronisierung werden zunächst 8 High-Low Pulse übermittelt, wobei diese 16 Bit der Datenfolge entsprechen und in Fig. 5 mit dem Bezugszeichen 510 bezeichnet sind. Direkt daran anschließend folgt die eigentliche Identifikationsinformation, welche im Datenspeicher des Chips 410 gespeichert ist und im dargestellten Ausführungsbeispiel eine ID-Kennung mit einer Datenlänge von 32 Bit ist, in Fig. 5 mit dem Bezugszeichen 520 bezeichnet. Ferner umfasst die Datenfolge einen Prüfwert zur Verifikation der ID-Kennung, im dargestellten Beispiel ein CRC (Cyclic Redundancy Check) mit einer Datenlänge von 8 Bit, welcher in Fig. 5 mit dem Bezugszeichen 530 bezeichnet ist. Der CRC-Prüfwert wird nach einer vorgegebenen Berechnungsvorschrift aus dem Wert der ID-Kennung berechnet. Entsprechende Berechnungsverfahren sind an sich bekannt und können beispielswiese die Bildung einer Quersumme umfassen. Da die ID-Kennung das Aufsteck-Modul 700 eindeutig identifiziert und dementsprechend eine ID-Kennung je Aufsteck-Modul nur einmalig vergeben wird und sich danach nicht ändert, kann vorteilhaft auch der zu übertragende CRC einmalig bei der Herstellung des Aufsteck-Moduls 700 ermittelt und in dem Datenspeicher des Chips 410 gespeichert werden, statt den CRC-Prüfwert bei jeder Übertragung neu zu berechnen. Abschließend folgt nochmals eine Folge von 8 High-Low Pulsen, d.h. 16 Bit, zur Synchronisation, in Fig. 5 mit dem Bezugszeichen 540 bezeichnet. Insgesamt wird daher im dargestellten Ausführungsbeispiel also eine Datenfolge mit einer Datenlänge von insgesamt 72 Bit übertragen.

Sollte die Verifikation anhand des empfangenen CRC eine fehlerhafte Übertragung signalisieren, so wird vorteilhaft durch Ausschalten und erneutes Einschalten der hohen Spannung, d.h. der Spannung oberhalb des vorgegebenen Schwellwertes, der Vorgang wiederholt. In dem in Fig. 5 dargestellten Ausführungsbeispiel hat die Identifikationsinformation, d.h. die gespeicherte ID, einen dezimalen Wert von 81 107 681 und der CRC-Prüfwert hat einen Wert von 32. Die Taktrate, mit welcher die Datenfolge 500 übertragen wird, kann vorteilhaft einen Wert von etwa 1 ms / Bit haben.

Nochmals bezugnehmend auf die Figuren 3a und 3b, ist in der dargestellten Ausführungsform der elektronischen Schaltung 400 eine Anschlussleiste 440 vorgesehen, welche als Programmierschnittstelle dient und mit deren Hilfe der Chip 410 programmiert werden kann. Besonders vorteilhaft wird der Chip 410 aber einmalig herstellerseitig programmiert und es wird eine zugeordnete einzigartige Identifikationsinformation in dem Datenspeicher des Chips 410 gespeichert, und es wird auf die in Fig. 3a dargestellte Anschlussleiste 440 und mit dieser verbundene Anschlussleitungen verzichtet, so dass eine nachträgliche Änderung der gespeicherten Identifikationsinformation vermieden wird. In diesem Fall werden nur die mit den Nummern 5, 2 und 4 bezeichneten Anschlüsse des Chips 410 verwendet, d.h. der Anschluss 5 für die Betriebsspannung, der Anschluss 2 zum Anschließen an Masse, sowie der Anschluss 4 als Ausgang zum Ansteuern des Transistors 452.

Die Komponenten der oben beschriebenen und in den Figuren 3a und 3b schematisch dargestellten elektronischen Schaltung 400 sind vorzugsweise vollständig oder teilweise auf einer gemeinsamen Platine innerhalb eines Schaltungsgehäuses des Aufsteck-Moduls 700 angeordnet.

Je nach Aufbau weist der Innenraum einer TAE-Dose unterschiedliche Freiräume auf. Das Aufsteck-Modul 700 ist vorzugsweise derart ausgebildet, dass das Schaltungsgehäuse, in welchem die elektronische Schaltung 400 angeordnet ist, in solchen Freiräumen positioniert ist, wenn das Aufsteck-Modul auf die jeweilige TAE aufgesteckt ist.

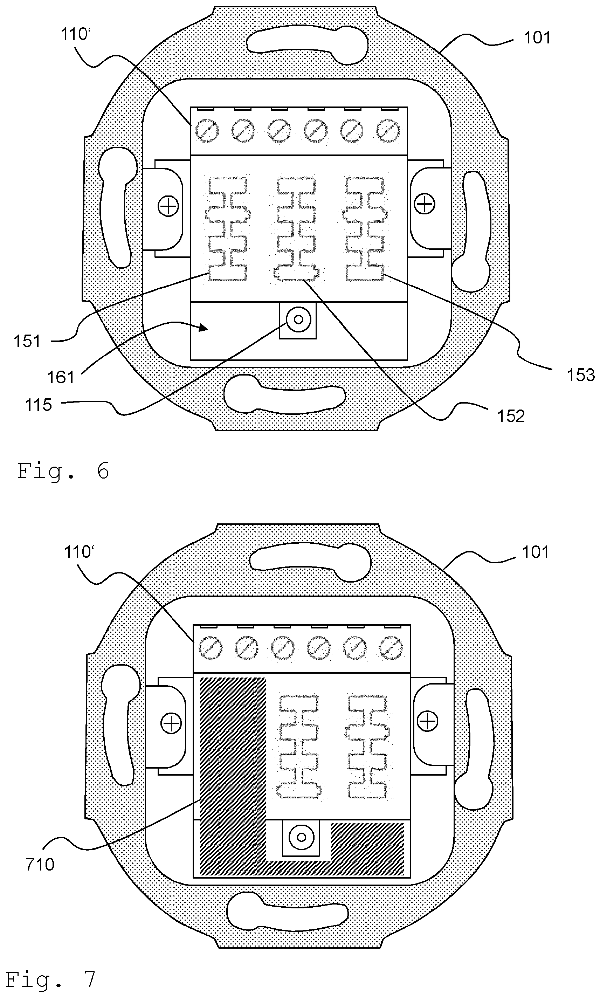

Nachfolgend werden unterschiedliche bevorzugte Ausführungsformen 710, 720, 730 und 740 eines Aufsteck-Moduls 700 im Zusammenhang mit den Figuren 7, 9, 10 und 11 näher beschrieben.

Fig. 6 zeigt schematisch den prinzipiellen Aufbau einer herkömmlichen TAE-Dose 101 zur Unterputzinstallation mit Krallen- und Schraubbefestigung. In der beispielhaft dargestellten NFN-Ausführung umfasst die TAE 101 zwei N-kodierte Anschlussbuchsen 151 und 153 und eine F-kodierte Anschlussbuchse 152. Ferner weist die TAE-Dose 101 in der dargestellten Ausführung eine Anschlussleiste 110', sowie ein Schraubgewinde 115 zum Befestigen einer Abdeckung auf.

Die TAE-Dose 101 weist einen Freiraum auf, welcher mit dem Bezugszeichen 161 gekennzeichnet ist. Dieser Raum kann typischerweise für eine weitere Anschlussleiste verwendet werden, die in der dargestellten Ausführungsform jedoch nicht vorgesehen ist.

Fig. 7 zeigt die in Fig. 6 dargestellte TAE-Dose 101 mit aufgestecktem Aufsteck-Modul 710, wobei zum Aufstecken ein Anschluss-Stecker des Aufsteck-Moduls in die linke N-kodierte Anschlussbuchse der TAE-Dose 101 eingesteckt wird. Im dargestellten Ausführungsbeispiel des Aufsteck-Moduls 710 ist die elektronische Schaltung 400 in einem Schaltungsgehäuse untergebracht, welches bei aufgestecktem Aufsteck-Modul 710 vorteilhaft in dem beschriebenen Freiraum der TAE-Dose 101 positioniert ist, wobei das Schaltungsgehäuse und der Anschluss-Stecker eine gemeinsame Baueinheit bilden.

Fig. 8 zeigt schematisch eine beispielhafte Ausführungsform des Anschluss-Stecker 650 des Aufsteck-Moduls 710, wobei der Anschluss-Stecker 650 vorzugsweise im oberen Bereich 670 eine Arretierungsvorrichtung 660 umfasst, welche bei bestimmungsgemäßem Gebrauch nur ein einmaliges Aufstecken des Aufsteck-Moduls 710 auf die Telekommunikations-Anschluss-Einheit 101 ermöglicht und ein Entfernen verhindert. Im dargestellten Ausführungsbeispiel ist die Arretierungsvorrichtung 660 als federnd eindrückbare Verriegelungsnase ausgebildet, welche sich entgegen der Einsteckrichtung verdickt und dadurch beim Einstecken des Anschluss-Steckers 650 in die Anschlussbuchse 151 quer zur Einsteckrichtung eingedrückt wird. Bei eingestecktem Anschluss-Stecker 650 rastet die Verriegelungsnase 660 ein, so dass die Anlagefläche 661 an einer innenliegenden Gehäusefläche der TAE 101 anliegt und ein Entfernen des Anschluss-Steckers 650 verhindert.

Fig. 9 zeigt eine zweite bevorzugte Ausführungsform eines Aufsteck-Moduls 720, welches zwei Anschluss-Stecker 721 und 722 umfasst, die zum gleichzeitigen Einstecken in die zwei N-kodierten Anschlussbuchsen einer TAE-Dose in NFN-Ausführung ausgebildet sind. Das Aufsteck-Modul umfasst im dargestellten Ausführungsbeispiel ein Verbindungsteil 723, welches die Anschluss-Stecker 721 und 722 miteinander verbindet. Die Komponenten der elektronischen Schaltung 400 sind in dem in Fig. 9 dargestellten Ausführungsbeispiel verteilt in den Anschluss-Steckern 721 und 722 angeordnet, wobei das Verbindungsteil 723 insbesondere als Platine ausgebildet sein kann, auf welcher die Komponenten der elektronischen Schaltung 400 angeordnet sind. Die Anschluss-Stecker 721 und 722 umfassen jeweils eine Verriegelungsnase 725, welche jeweils drei senkrecht zur Einsteckrichtung angeordnete Arretierungsstifte 726 aufweist. Im eingesteckten Zustand des Aufsteck-Moduls 720 rasten die Arretierungsstifte 726 ein, wobei diese im eingerasteten Zustand an einer innenliegenden Gehäusefläche der jeweiligen TAE anliegen, um ein Entfernen des Aufsteck-Moduls 720 zu verhindern. Durch den Einsatz mehrerer Arretierungsstifte 726 wird vorteilhaft ein Entfernen des Aufsteck-Moduls 720 durch Service-Personal mit Hilfe eines speziell angepassten Werkzeugs ermöglicht, wobei dieses Werkzeug insbesondere in den Zwischenräumen zwischen den Arretierungsstiften 726 eingreift, um die Verriegelungsnase 725 einzudrücken.

In Fig. 10 ist eine dritte bevorzugte Ausführungsform eines Aufsteck-Moduls 730 schematisch dargestellt, welches einen einzelnen Anschluss-Stecker 731 zum Einstecken in eine N-kodierte Anschlussbuchse einer TAE umfasst. Der Anschluss-Stecker 731 weist eine Verriegelungsnase, die im Aufbau der Verriegelungsnase der Anschluss-Stecker 721 und 722 entspricht. Ferner umfasst das Aufsteck-Modul 730 ein Schaltungsgehäuse 732, in welchem die elektronische Schaltung 400 ganz oder teilweise untergebracht ist. Einzelne Komponenten der elektronischen Schaltung 400 können vorteilhaft auch innerhalb des Anschluss-Steckers 731 untergebracht sein. Im dargestellten Ausführungsbeispiel ist der Anschlusskontakt 735 des Anschluss-Steckers 731, welcher zum Kontaktieren der a-Ader vorgesehen ist, mit dem Anschluss 401 der elektronischen Schaltung 400 elektrisch verbunden, und der Anschlusskontakt 736 des Anschluss-Steckers 731, welcher zum Kontaktieren der b-Ader vorgesehen ist, ist mit dem Anschluss 402 der elektronischen Schaltung 400 elektrisch verbunden.

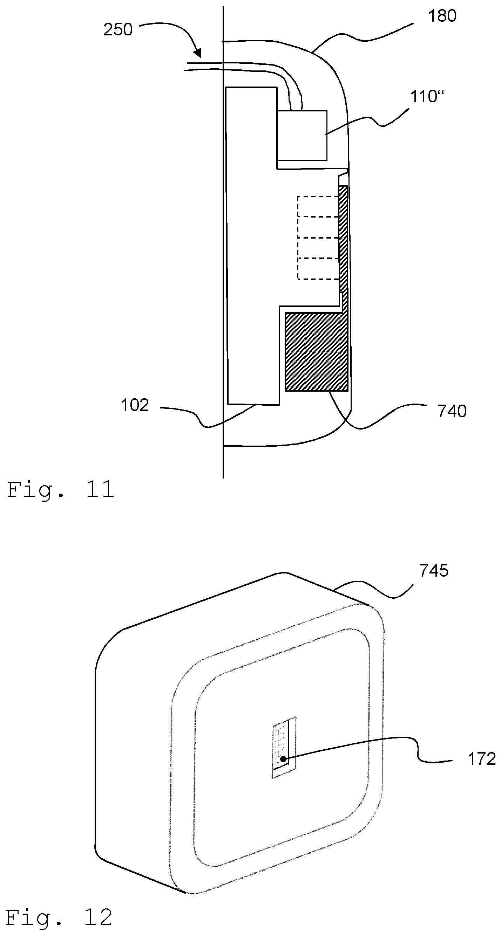

In Fig. 11 ist eine vierte bevorzugte Ausführungsform eines Aufsteck-Moduls 740 schematisch dargestellt, wobei das Aufsteck-Modul 740 auf eine als Aufputz-Dose ausgebildete TAE 102 aufgesteckt ist. Die TAE 102 umfasst eine Anschlussleiste 110", an welcher die a- und b-Ader der Teilnehmeranschlussleitung 250 angeschlossen sind. Im dargestellten Ausführungsbeispiel umfasst das Aufsteck-Modul 740 in ähnlicher Weise wie das in Fig. 10 dargestellte Aufsteck-Modul 730 ein Schaltungsgehäuse, dessen Form und dessen Maße an einen Freiraum im Gehäuse 180 der TAE 102 angepasst sind.

Vorteilhaft kann das Gehäuse der TAE, auf welche das Aufsteck-Modul aufgesteckt werden soll, ersetzt werden. Dies ist beispielhaft in Fig. 12 dargestellt. Das schematisch dargestellte Gehäuse 745 bildet vorteilhaft einen Bestandteil eines Aufsteck-Moduls. Insbesondere kann das Gehäuse 745 mit einem Aufsteck-Modul 740, wie es beispielhaft in Fig. 11 dargestellt ist, lösbar oder nicht lösbar verbunden sein.

Vorteilhaft kann das in Fig. 12 dargestellte Gehäuse 745 zusammen mit der in Fig. 11 dargestellten vierten Ausführungsform eines Aufsteck-Moduls 740 eine gemeinsame Baueinheit bilden, wobei diese eine fünfte bevorzugte Ausführungsform eines Aufsteck-Moduls darstellt. Das Gehäuse 745 ist in der dargestellten Ausführungsform so ausgebildet, dass nur die mittlere F-kodierte Anschlussbuchse 172 einer TAE in NFN-Ausführung zugänglich bleibt zum Anschließen eines Teilnehmerendgerätes 300 oder zum Anschließen eines Auslesegerätes 160.

Der oben beschriebene besonders einfache Aufbau der elektronischen Schaltung 400 ist besonders vorteilhaft, da dadurch die für die bauliche Ausgestaltung des Aufsteck-Moduls einzuhaltenden geringen Abmessungen erreicht werden können. Zudem wird durch den einfachen Aufbau ein unnötiger Energieverbrauch und eine unnötige Wärmeentwicklung vermieden.

Statt der oben beschriebenen Aktivierung der Steuereinheit des Aufsteck-Moduls durch eine an die Anschlüsse 401 und 402 angelegte Spannung oberhalb einer vorgegebenen Schwellspannung, wären prinzipiell auch andere Varianten zur Aktivierung der Steuereinheit denkbar, wie zum Beispiel die Übertragung eines vorgegebenen Datensignals, wobei auch vorgesehen sein könnte, die Steuereinheit dauerhaft mit einer Betriebsspannung zu versorgen.

Der Einsatz eines oben beschriebenen Aufsteck-Moduls ermöglicht es besonders vorteilhaft, vermittlungsseitig eine vollständige Überprüfung der Verschaltung eines Teilnehmeranschlusses durchzuführen, ohne die Notwendigkeit einer Überprüfung der Verschaltung vor Ort.

### Bezugszeichenliste:

- 100, 101, 102: Teilnehmer-Anschluss-Einheit (TAE)
- 110, 110', 110": Anschlussleiste
- 115: Schraubgewinde
- 121, 122: Kontakte einer Anschlussbuchse
- 130: Diode
- 140: Widerstand
- 151, 152, 153: Anschlussbuchse
- 160: Auslesegerät
- 161: Freiraum
- 170: Datenspeicher
- 172: Anschlussbuchse
- 180: Gehäuse
- 200: Vermittlungsstelle
- 210: MSAN (Multi-Service Access Node)
- 220: DSLAM (Digital Subscriber Line Access Multiplexer)
- 230: BRAS (Broadband Remote Access Server)
- 250: Zweiadrige Teilnehmeranschlussleitung
- 300: Teilnehmerendgerät
- 400: Elektronische Schaltung
- 401, 402: Anschlüsse der elektronischen Schaltung
- 410: Integrierter Chip
- 420: Gleichrichter
- 425: Überspannungsableiter
- 431, 432: DIACs
- 440: Anschlussleiste
- 451, 452: Transistoren
- 461, 462: Induktivitäten
- 470: Zenerdiode
- 471, 475: Diode
- 480: Kondensator
- 491 - 497: Widerstände
- 500: Datenfolge
- 510, 540: Synchronisationssignal
- 520: Identifikationsinformation
- 530: CRC
- 600: Passiver Prüfabschluss
- 601, 602: Verbindungspunkte
- 650: Anschluss-Stecker
- 660: Verriegelungsnase
- 661: Anlagefläche
- 670: Oberer Bereich
- 700, 710, 720, 730, 740: Aufsteck-Modul
- 721, 722, 731: Anschluss-Stecker
- 723: Verbindungsteil
- 725: Verriegelungsnase
- 726: Arretierungsstift
- 732: Schaltungsgehäuse
- 735, 736: Anschlusskontakte
- 745: Gehäuse

## Patentansprüche

1. Aufsteck-Modul (700, 710, 720, 730, 740) zum Aufstecken auf eine Telekommunikations-Anschluss-Einheit (100, 101, 102), umfassend
- wenigstens einen in eine Anschlussbuchse (151, 152, 153) der Telekommunikations-Anschluss-Einheit (101) einsteckbaren Anschluss-Stecker (721,722, 731), wobei der Anschluss-Stecker eine Arretierungsvorrichtung (660, 725) umfasst, welche bei bestimmungsgemäßem Gebrauch nur ein einmaliges Aufstecken des Aufsteck-Moduls auf die Telekommunikations-Anschluss-Einheit ermöglicht und ein Entfernen des Aufsteck-Moduls von der Telekommunikations-Anschluss-Einheit verhindert, und
- einen über Anschlüsse des Anschluss-Steckers mittels eines externen Gerätes (160, 210) auslesbaren Datenspeicher (170) mit einer darin gespeicherten Identifikationsinformation, welche das Aufsteck-Modul eindeutig identifiziert.

2. Aufsteck-Modul nach Anspruch 1, wobei die Arretierungsvorrichtung als federnd eindrückbare Verriegelungsnase (660, 725) ausgebildet ist.

3. Aufsteck-Modul nach einem der vorstehenden Ansprüche, wobei der wenigstens eine Anschluss-Stecker (721,722, 731) zum Einstecken in eine N-Buchse ausgebildet ist.

4. Aufsteck-Modul nach einem der vorstehenden Ansprüche, umfassend zwei Anschluss-Stecker (721, 722) zum Einstecken in die zwei N-Buchsen einer Telekommunikations-Anschluss-Einheit (101) mit drei Anschlussbuchsen in NFN-Ausführung.

5. Aufsteck-Modul nach einem der vorstehenden Ansprüche, ausgebildet zum Aufstecken auf eine als Unterputzdose (101) ausgebildete Telekommunikations-Anschluss-Einheit.

6. Aufsteck-Modul nach einem der Ansprüche 1 bis 4, ausgebildet zum Aufstecken auf eine als Aufputzdose (102) ausgebildete Telekommunikations-Anschluss-Einheit.

7. Aufsteck-Modul nach Anspruch 6, umfassend ein Gehäuse (745), welches insbesondere zum Austausch eines Gehäuses der Telekommunikations-Anschluss-Einheit ausgebildet ist, auf welche das Aufsteck-Modul aufgesteckt werden soll.

8. Aufsteck-Modul nach einem der vorstehenden Ansprüche, umfassend eine Steuereinheit (410), wobei der Datenspeicher mittels der Steuereinheit auslesbar ist, und wobei die Steuereinheit dazu ausgebildet ist, in Antwort auf ein Aktivierungssignal, welches die Steuereinheit von dem externen Gerät (210, 160) empfängt, eine in dem Datenspeicher gespeicherte Identifikationsinformation an das externe Gerät (210, 160) zu übermitteln.

9. Aufsteck-Modul nach Anspruch 8, wobei die Steuereinheit dazu ausgebildet ist, in Antwort auf das Aktivierungssignal automatisch die im Datenspeicher gespeicherte Identifikationsinformation mittels eines strommodulierten Signals (500) zu übermitteln.

10. Aufsteck-Modul nach einem der Ansprüche 8 oder 9, wobei die Steuereinheit als Mikrocontroller ausgebildet ist, wobei insbesondere der Mikrocontroller und der Datenspeicher in einem gemeinsamen integrierten Chip (410) angeordnet sind.

11. Aufsteck-Modul nach einem der vorstehenden Ansprüche, umfassend eine mit wenigstens zwei Anschlüssen des Anschluss-Steckers verbundene elektronische Schaltung (400), wobei die elektronische Schaltung (400) dazu ausgebildet ist, die Steuereinheit (410) zu aktivieren, wenn an die elektronische Schaltung eine Spannung oberhalb eines vorgegebenen Schwellwertes, insbesondere oberhalb einer Spannung von 60 V, insbesondere oberhalb einer Spannung von 64 V, angelegt wird.

12. Aufsteck-Modul nach Anspruch 11, wobei das Aufsteck-Modul zum Aufstecken auf eine Telekommunikations-Anschluss-Einheit ausgebildet ist, welche einen Netzabschluss bildet und einen passiven Prüfabschluss (130, 140) umfasst, wobei bei aufgestecktem Aufsteck-Modul die elektronische Schaltung (400) und der passive Prüfabschluss parallelgeschaltet sind.

13. Auslesegerät (210, 160) zum Auslesen eines Datenspeichers (170) eines Aufsteck-Moduls (700, 710, 720, 730, 740) gemäß einem der Ansprüche 1 bis 12, verbindbar mit dem Aufsteck-Modul oder verbindbar über eine Teilnehmeranschlussleitung mit einer TAE, in welcher das Aufsteck-Modul eingesteckt ist, dazu ausgebildet, an Anschlüsse des Anschluss-Steckers des Aufsteck-Moduls eine Spannung oberhalb eines vorgegebenen Schwellwertes oberhalb einer Spannung von 60 V, insbesondere oberhalb einer Spannung von 64 V, anzulegen.

14. Auslesegerät nach Anspruch 13, dazu ausgebildet, von dem Aufsteck-Modul ein strommoduliertes Signal (500) zu empfangen und aus diesem eine Identifikationsinformation (520) zu ermitteln.

15. Verfahren zur Identifikation eines Aufsteck-Moduls, umfassend die Schritte:
a) Bereitstellen eines Aufsteck-Moduls (700, 710, 720, 730, 740) gemäß einem der Ansprüche 1 bis 12,
b) Speichern einer eindeutigen Identifikationsinformation in dem Datenspeicher (170) des Aufsteck-Moduls, welche das Aufsteck-Modul eindeutig identifiziert,
c) Aufstecken des Aufsteck-Moduls auf eine mit einem Teilnehmeranschluss verbundene Telekommunikations-Anschluss-Einheit (100, 101, 102),
d) Aktivieren einer in dem Aufsteck-Modul angeordneten Steuereinheit (410) durch Übertragen eines Aktivierungssignals zu der Steuereinheit von einem mit den Anschlüssen des wenigstens einen Anschluss-Steckers des Aufsteck-Moduls verbundenen Auslesegerät (210, 160) gemäß einem der Ansprüche 13 oder 14,
e) in Antwort auf die Aktivierung, automatisches Übermitteln durch die Steuereinheit eines in Abhängigkeit der in dem Datenspeicher gespeicherten Identifikationsinformation erzeugten Signals (500) von dem Aufsteck-Modul zu dem verbundenen Auslesegerät, und
f) Empfangen des Signals (500) und Ermitteln der Identifikationsinformation (520) aus dem empfangenen Signal (500) durch das verbundene Auslesegerät (210, 160).

## Claims

1. A plug-on module (700, 710, 720, 730, 740) for plugging onto a telecommunications connection unit (100, 101, 102), comprising
- at least one connection plug (721, 722, 731) that can be plugged into a connection socket (151, 152, 153) of the telecommunications connection unit (101), wherein the connection plug comprises a locking device (660, 725) which, when used as intended, only allows the plug-on module to be plugged onto the telecommunications connection unit once and prevents the plug-on module from being removed from the telecommunications connection unit, and
- a data memory (170) with identification information stored therein which uniquely identifies the plug-on module, said data memory (170) being readable via terminals of the connection plug by means of an external device (160, 210).

2. The plug-on module according to claim 1, wherein the locking device is designed as an elastically depressible locking lug (660, 725).

3. The plug-on module according to any one of the preceding claims, wherein the at least one connector plug (721, 722, 731) is designed for insertion into an N socket.

4. The plug-on module according to any one of the preceding claims, comprising two connection plugs (721, 722) for insertion into the two N sockets of a telecommunications connection unit (101) with three connection sockets in NFN design.

5. The plug-on module according to any one of the preceding claims, designed to be plugged onto a telecommunications connection unit designed as a flush-mounted box (101).

6. The plug-on module according to any one of claims 1 to 4, designed to be plugged onto a telecommunications connection unit designed as a surface-mounted box (102).

7. The plug-on module according to claim 6, comprising a housing (745) which is in particular designed to replace a housing of the telecommunications connection unit onto which the plug-on module is to be plugged.

8. The plug-on module according to any one of the preceding claims, comprising a control unit (410), wherein the data memory can be read by means of the control unit, and wherein the control unit is designed to transmit an identification information item stored in the data memory to the external device (210, 160) in response to an activation signal, which the control unit receives from the external device (210, 160).

9. The plug-on module according to claim 8, wherein the control unit is designed to automatically transmit the identification information item stored in the data memory by means of a current-modulated signal (500) in response to the activation signal.

10. The plug-on module according to any one of claims 8 or 9, wherein the control unit is designed as a microcontroller, wherein in particular the microcontroller and the data memory are arranged in a common integrated chip (410).

11. The plug-on module according to any one of the preceding claims, comprising an electronic circuit (400) connected to at least two terminals of the connection plug, wherein the electronic circuit (400) is designed to activate the control unit (410) when a voltage above a predetermined threshold value, in particular above a voltage of 60 V, in particular above a voltage of 64 V, is applied to the electronic circuit.

12. The plug-on module according to claim 11, wherein the plug-on module is designed to be plugged onto a telecommunications connection unit which forms a network termination and comprises a passive test termination (130, 140), wherein, when the plug-on module is plugged on, the electronic circuit (400) and the passive test termination are connected in parallel.

13. A readout device (210, 160) for reading out a data memory (170) of a plug-on module (700, 710, 720, 730, 740) according to any one of claims 1 to 12, connectable to the plug-on module or connectable via a subscriber line to a TAE in which the plug-on module is plugged in, designed to apply a voltage above a predetermined threshold value above a voltage of 60 V, in particular above a voltage of 64 V, to terminals of the connection plug of the plug-on module.

14. The readout device according to claim 13, designed to receive a current-modulated signal (500) from the plug-on module and to determine an identification information item (520) from this signal.

15. A method for identifying a plug-on module, comprising the steps of:
a) providing a plug-on module (700, 710, 720, 730, 740) according to any one of claims 1 to 12,
b) storing a unique identification information item in the data memory (170) of the plug-on module, which uniquely identifies the plug-on module,
c) plugging the plug-on module onto a telecommunications connection unit (100, 101, 102) connected to a subscriber connection,
d) activating a control unit (410) arranged in the plug-on module by transmitting an activation signal to the control unit from a readout device (210, 160) according to any one of claims 13 or 14, which is connected to the terminals of the at least one connection plug of the plug-on module,
e) in response to the activation, automatic transmission of a signal (500), which is generated in dependence on the identification information item stored in the data memory, by the control unit from the plug-on module to the connected readout device, and
f) receiving the signal (500) and determining the identification information item (520) from the received signal (500) by the connected readout device (210, 160).

## Revendications

1. Module enfichable (700, 710, 720, 730, 740) destiné à être enfiché sur une unité de raccordement de télécommunications (100, 101, 102), comprenant
- au moins une fiche de raccordement (721, 722, 731) pouvant être enfichée dans une prise de raccordement (151, 152, 153) de l'unité de raccordement de télécommunications (101), dans lequel la fiche de raccordement comprend un dispositif de verrouillage (660, 725), lequel, dans les conditions normales d'emploi, ne permet qu'un enfichage unique du module enfichable sur l'unité de raccordement de télécommunications et empêche un retrait du module enfichable de l'unité de raccordement de télécommunications, et
- une mémoire de données (170), pouvant être lue par l'intermédiaire des raccordements de la fiche de raccordement par le biais d'un appareil (160, 210) externe, comportant des informations d'identification mémorisées, lesquelles identifient de manière univoque le module enfichable.

2. Module enfichable selon la revendication 1, dans lequel le dispositif de verrouillage est conçu sous la forme d'une patte de verrouillage (660, 725) pouvant être enfoncée de manière élastique.

3. Module enfichable selon l'une quelconque des revendications précédentes, dans lequel l'au moins une fiche de raccordement (721, 722, 731) est conçue pour être insérée dans une prise N.

4. Module enfichable selon l'une quelconque des revendications précédentes, comprenant deux fiches de raccordement (721, 722) destinées à être enfichées dans les deux prises N d'une unité de raccordement de télécommunications (101) comportant trois prises de raccordement de conception NFN.

5. Module enfichable selon l'une quelconque des revendications précédentes, conçu pour être enfiché sur une unité de raccordement de télécommunications conçue sous la forme d'un boîtier encastrable (101).

6. Module enfichable selon l'une quelconque des revendications 1 à 4, conçu pour être enfiché sur une unité de raccordement de télécommunications conçue sous la forme d'un boîtier apparent (102).

7. Module enfichable selon la revendication 6, comprenant un boîtier (745), lequel est conçu en particulier pour remplacer un boîtier de l'unité de raccordement de télécommunications sur lequel le module enfichable doit être enfiché.

8. Module enfichable selon l'une quelconque des revendications précédentes, comprenant une unité de commande (410), dans lequel la mémoire de données est lisible par le biais de l'unité de commande, et dans lequel l'unité de commande est conçue pour transmettre, en réponse à un signal d'activation, que l'unité de commande reçoit de l'appareil (210, 160) externe, des informations d'identification mémorisées dans la mémoire de données à l'appareil (210, 160) externe.

9. Module enfichable selon la revendication 8, dans lequel l'unité de commande est conçue pour transmettre automatiquement, en réponse au signal d'activation, les informations d'identification mémorisées dans la mémoire de données par le biais d'un signal (500) modulé en courant.

10. Module enfichable selon l'une quelconque des revendications 8 ou 9, dans lequel l'unité de commande est conçue sous la forme d'un microcontrôleur, dans lequel, en particulier le microcontrôleur et la mémoire de données sont agencés dans une puce (410) intégrée commune.

11. Module enfichable selon l'une quelconque des revendications précédentes, comprenant un circuit (400) électronique connecté à au moins deux raccordements de la fiche de raccordement, dans lequel le circuit (400) électronique est conçu pour activer l'unité de commande (410) lorsqu'une tension supérieure à une valeur seuil prédéterminée, en particulier supérieure à une tension de 60 V, en particulier supérieure à une tension de 64 V, est appliquée au circuit électronique.

12. Module enfichable selon la revendication 11, dans lequel le module enfichable est conçu pour être enfiché sur l'unité de raccordement de télécommunications, laquelle forme une terminaison de réseau et comprend une terminaison d'essai (130, 140) passive, dans lequel lorsque le module enfichable est enfiché, le circuit (400) électronique et la terminaison d'essai passive sont montés en parallèle.

13. Appareil de lecture (210, 160) permettant de lire une mémoire de données (170) d'un module enfichable (700, 710, 720, 730, 740) selon l'une quelconque des revendications 1 à 12, pouvant être connecté au module enfichable ou pouvant être connecté par l'intermédiaire d'une ligne d'abonné à une prise de raccordement UTS dans laquelle le module enfichable est enfiché, conçu pour appliquer une tension supérieure à une valeur seuil prédéterminée supérieure à une tension de 60 V, en particulier supérieure à une tension de 64 V, aux raccordements de la fiche de raccordement du module enfichable.

14. Appareil de lecture selon la revendication 13, conçu pour recevoir un signal (500) modulé en courant du module enfichable et pour déterminer à partir dudit signal des informations d'identification (520).

15. Procédé d'identification d'un module enfichable, comprenant les étapes suivantes :
a) la fourniture d'un module enfichable (700, 710, 720, 730, 740) selon l'une quelconque des revendications 1 à 12,
b) la mémorisation d'informations d'identification univoques dans la mémoire de données (170) du module enfichable, lesquelles identifient de manière univoque le module enfichable,
c) l'enfichage du module enfichable sur une unité de raccordement de télécommunications (100, 101, 102) connectée à une ligne d'abonné,
d) l'activation d'une unité de commande (410) agencée dans le module enfichable par transmission d'un signal d'activation à l'unité de commande à partir d'un appareil de lecture (210, 160) selon l'une quelconque des revendications 13 ou 14 connecté aux raccordements de l'au moins une fiche de raccordement du module enfichable,
e) la transmission automatique, en réponse à l'activation, par l'intermédiaire de l'unité de commande, d'un signal (500) généré en fonction des informations d'identification mémorisées dans la mémoire de données, du module enfichable à l'appareil de lecture connecté, et
f) la réception du signal (500) et la détermination des informations d'identification (520) à partir du signal (500) reçu par l'intermédiaire de l'appareil de lecture (210, 160) connecté.
